# EUROPÄISCHE PATENTSCHRIFT

(11) **EP 3 006 919 B1**
(45) Veröffentlichungstag und Bekanntmachung des Hinweises auf die Patenterteilung: **29.12.2021**
(21) Anmeldenummer: 15187744.6
(22) Anmeldetag: 30.09.2015
(51) Int. Cl.: G01N 21/31, G01D 5/353, G01N 21/3554, G01N 21/552

(54) **VERFAHREN ZUR ORTSAUFGELÖSTEN MESSUNG VON MOLEKÜLKONZENTRATIONEN UND/ODER TEMPERATUR MITTELS OPTISCHER FASERN**
METHOD FOR SPATIALLY RESOLVED MEASUREMENT OF MOLECULE CONCENTRATIONS AND/OR TEMPERATURE BY MEANS OF OPTICAL FIBRES
PROCEDE ET DISPOSITIF DE MESURE A RESOLUTION SPATIALE DE CONCENTRATIONS MOLECULAIRE ET/OU DE TEMPERATURE A L'AIDE DE FIBRES OPTIQUES

(30) Priorität: 07.10.2014 DE 102014114521
(43) Veröffentlichungstag der Anmeldung: 13.04.2016
(73) Patentinhaber: Bundesrepublik Deutschland, vertreten durch den Bundesminister für Wirtschaft und Energie, 12205 Berlin (DE)
(72) Erfinder: Liehr, Sascha, 12051 Berlin (DE)
(74) Vertreter: Zimmermann & Partner Patentanwälte mbB

(56) Entgegenhaltungen:
- EP-A1- 2 363 700
- DE-A1- 19 631 423
- US-A1- 2002 018 629
- SAUNDERS C ET AL: "Distributed plastic optical fibre measurement of pH using a photon counting OTDR", JOURNAL OF PHYSICS: CONFERENCE SERIES, INSTITUTE OF PHYSICS PUBLISHING, BRISTOL, GB, Bd. 15, Nr. 1, 1. Januar 2005 (2005-01-01) , Seiten 61-66, XP020093806, ISSN: 1742-6596, DOI: 10.1088/1742-6596/15/1/011
- VARGHESE P BENJAMIN ET AL: "Fiber optic sensor for the measurement of concentration of silica in water with dual wavelength probing", REVIEW OF SCIENTIFIC INSTRUMENTS, AIP, MELVILLE, NY, US, Bd. 81, Nr. 3, 29. März 2010 (2010-03-29), Seiten 35111-35111, XP012134912, ISSN: 0034-6748, DOI: 10.1063/1.3360880
- SASCHA LIEHR ET AL: "Distributed Humidity Sensing in PMMA Optical Fibers at 500 nm and 650 nm Wavelengths", SENSORS, vol. 17, no. 4, 31 March 2017 (2017-03-31) , page 738, XP55613421, DOI: 10.3390/s17040738
- A Rossaro ET AL: "Spatially resolved chromatic dispersion measurement by a bidirectional OTDR technique", IEEE Journal of Selected Topics in Quantum Electronics, 1 January 2001 (2001-01-01), pages 475-483, XP55252874, New York DOI: 10.1109/2944.962271 Retrieved from the Internet: URL:http://www-3.unipv.it/donati/papers/N2 .pdf
- Liehr Dipl.-Ing Sascha: "Fibre Optic Sensing Techniques Based on Incoherent Optical Frequency Domain Reflectometry", BAM-Dissertationsreihe - Band 125, 4 February 2015 (2015-02-04), XP055820388, Retrieved from the Internet: URL:https://opus4.kobv.de/opus4-bam/frontd oor/index/index/docId/466 [retrieved on 2021-07-01]
- DATABASE COMPENDEX [Online] ENGINEERING INFORMATION, INC., NEW YORK, NY, US; 8 October 2014 (2014-10-08), STEFFEN M ET AL: "Investigations on climatic influences on spectral backscatter properties of perfluorinated-POF for distributed sensing", Database accession no. E20151200662807 & STEFFEN M ET AL: "Investigations on climatic influences on spectral backscatter properties of perfluorinated-POF for distributed sensing", POF 2014 - 23RD INTERNATIONAL CONFERENCE ON PLASTIC OPTICAL FIBERS, PROCEEDINGS 2014 INTERNATIONAL CONFERENCE ON PLASTIC OPTICAL FIBERS USA, 2014, pages 52-55,

## Beschreibung

Die vorliegende Erfindung betrifft eine Messvorrichtung und ein Verfahren zur Messung eines ortsaufgelösten Konzentrationsprofils und/oder eines Temperaturprofils mit einem faseroptischen Sensor, insbesondere mit einem Sensor entlang einer optischen Polymerfaser.

Faseroptische Sensoren spielen zunehmend eine Rolle bei der Überwachung ausgedehnter Strukturen wie beispielsweise Gebäude, Dämme oder Deiche. Dabei werden die faseroptischen Sensoren insbesondere zur Dehnungsmessung verwendet, da sich die Streueigenschaften der Faser für verschiedene Dehnungszustände unterscheiden. Typischerweise werden für solche Untersuchungen Rückstreu-Messverfahren eingesetzt. Diese Rückstreu-Messverfahren erlauben, eine örtliche Verteilung der Messgröße entlang der Faser zu erfassen. Unter den Rückstreu-Messverfahren ist die optische Rückstreumessung im Zeitbereich, auch kurz OTDR (engl.: Optical Time Domain Reflectometry) die am weitesten verbreitete Messtechnik. Beispielsweise wird beim OTDR-Verfahren ein kurzer Lichtpuls in die Faser eingestrahlt und das rückgestreute Licht als Funktion der Zeit aufgezeichnet. Die Laufzeit des Lichts in der Faser ergibt sich zu 2^{∗}d/c^{∗}n, wobei d die einfache Strecke entlang der Faser zur Streustelle, c die Lichtgeschwindigkeit und n die effektive Brechzahl in der Faser ist. Die Größe c/n entspricht also der effektiven Geschwindigkeit v des Lichts in der Faser. Auf diese Weise kann ein Bezug zwischen dem zeitlichen Verlauf und dem örtlichen Verlauf des Signals hergestellt werden und der Ort eines Streuzentrums in der Faser lokalisiert werden. Neben der Zeitbereichsanalyse (OTDR) sind dem Fachmann weiterhin die Korrelationsbereichsanalyse und die Frequenzbereichsanalyse als Rückstreu-Messverfahren bekannt.

Typischerweise werden Glasfasern als optische Fasersensoren verwendet, wobei bereits faseroptische Dehnungssensoren aus Glasfaser im Stand der Technik bekannt sind. Allerdings sind Glasfasern nicht zur Messung größerer Dehnungen, beispielsweise über 1% geeignet. Ferner können mit Glasfasern nur schlecht oder gar nicht Konzentrationsprofile gemessen werden, da Moleküle kaum in eine solche Faser eindringen. Im Gegensatz zu den Glasfasersensoren sind Sensoren auf Basis optischer Polymerfasern, kurz POF (engl.: Polymer Optical Fiber), auch zur Dehnungsmessung für Dehnungen bis über 45% geeignet, in manchen Fällen sogar über 100%.

Bei der oben beschriebenen Überwachung von Bauwerken, insbesondere von Erdbauwerken wie Kriechhängen, Dämmen oder im Tagebau, aber auch in Gebäuden aus Mauerwerk, wäre es wünschenswert, zusätzlich zur Dehnungsmessung auch eine Feuchtemessung vornehmen zu können. Feuchte ist häufig eine Ursache für Material- oder Strukturschädigung, wie etwa von Korrosion, Aufweichung oder Änderung der Tragfähigkeit. Wenn solche Schädigungen frühzeitig erkannt werden, können Gegenmaßnahmen eingeleitet werden, bevor ein Schaden entsteht. Feuchte kann auch ein Indikator für Fehlerquellen in technischen Geräten sein oder ein Risiko für Schimmelbildung und Verfall in Gebäuden anzeigen.

Feuchtemessungen werden bislang mit elektrischen Sensoren oder faseroptischen Sensoren nur skalar ausgeführt, d.h. eine ortsaufgelöste Messung entlang einer Strecke ist nicht möglich. Vielmehr wird die Feuchte lediglich mit Punktsensoren an den jeweiligen Sensororten erfasst. Die Überwachung ausgedehnter Strukturen mit Punktsensoren ist daher äußerst aufwendig, da viele Sensoren zur Abdeckung der Struktur benötigt werden. Jeder dieser Punktsensoren muss weiterhin einzeln verkabelt werden, was aufwendig ist und die Fehleranfälligkeit des Gesamtsystems erhöht. Weiterhin ist nicht ausgeschlossen, dass eine kritische Feuchte lediglich zwischen zwei Sensorpunkten auftritt und daher unerkannt bleibt.

In EP 2363700 A1 wurde ein neues Verfahren zur Feuchtemessung für einen faseroptischen Sensor vorgestellt, das das Bereitstellen von Rückstreu-Messdaten einer optischen Polymerfaser, das Ermitteln eines Streuintensitätsprofils entlang der optischen Polymerfaser aus den Rückstreu-Messdaten das Vergleichen des ermittelten Streuintensitätsprofils mit einer Referenzintensität, um ein relatives Streuintensitätsprofil zu erhalten, und das Ermitteln eines Feuchtigkeitsprofils entlang der optischen Polymerfaser anhand des relativen Streuintensitätsprofils umfasst.

Allerdings werden durch dieses Verfahren relativ ungenaue Messdaten erhalten und das Verfahren ist ferner limitiert hinsichtlich zu detektierender Parameter, auch in chemischer Hinsicht. Weiter beschreibt US 2002/0018629 A1 einen verteilten optischen Fasersensor mit kontrolliertem Leistungsverlust, umfassend einen Faserkern und einen Mantel, wobei wenigstens ein Parameter des Mantels vom Fasereingangsende zum Faserausgangsende so variiert, dass ein Leistungsverlust je Längeneinheit über die gesamte Faserlänge konstant ist. Dieses Dokument offenbart die ortsaufgelöste Ermittlung von Feuchte entlang der Faser anhand von Rückstreumessungen bei einer Messwellenlänge (850 nm) und einer Referenzwellenlänge (1300 nm). Die DE 196 31 423 A1 beschreibt ein Verfahren und eine Vorrichtung zum ortsaufgelösten Substanznachweis. Saunders C. und Scully P.J. beschreiben in Journal of Physics: Conference Series 15 (2005) pp. 61-66 der Serie "Sensors & their Applications XIII" die Messung von pH-Werten mit einem verteilten optischen Polymerfasersensor unter Verwendung der photonenzählenden OTDR. Rossaro A., Schiano M., Tambosso T. und D'Alessandro D. (2001) beschreiben in IEEE Journal of Selected Topics on Quantum Electronics 7(3):475-483 eine ortsaufgelöste chromatische Dispersionsmessung mittels bidirektionaler OTDR-Technik.

Im Hinblick auf das oben Gesagte wird ein Verfahren gemäß Anspruch 1 und eine Messvorrichtung gemäß Anspruch 5 bereitgestellt. Weitere Aspekte, Einzelheiten, Vorteile und Merkmale der vorliegenden Erfindung ergeben sich aus den Unteransprüchen, der Beschreibung sowie den beigefügten Zeichnungen.

Gemäß einem allgemeinen Beispiel, das nicht auf die Erfindung eingeschränkt ist, wird ein Verfahren zur Messung eines Konzentrationsprofils und/oder eines Temperaturprofils mittels faseroptischen Sensor bereitgestellt. Das Verfahren umfasst das Bereitstellen von Rückstreu-Messdaten einer optischen Polymerfaser für eine erste Wellenlänge mit messbarer Absorption für zu detektierende Molekülgruppen, das Bereitstellen von Rückstreu-Messdaten einer optischen Polymerfaser für eine zweite Wellenlänge ohne oder mit geringer messbarer Absorption für zu detektierende Molekülgruppen, das Ermitteln von ortsaufgelösten Streuintensitätsänderungen entlang der optischen Polymerfaser aus den Rückstreu-Messdaten, das Vergleichen der ermittelten Streuintensitätsänderungen mit einer Referenzintensität, um ein relatives Streuintensitätsprofil zu erhalten und das Ermitteln eines Konzentrationsprofils und/oder eines Temperaturprofils entlang der optischen Polymerfaser anhand des relativen Streuintensitätsprofils.

Mittels dieses Verfahrens ist es möglich die Konzentration eines Stoffes sowie die Temperatur entlang eines faseroptischen Sensors zu erfassen. Insbesondere ist es möglich die Konzentration von Wasser, Methan, Ethen, Propen, Benzol, Toluol und/oder Xylol zu messen. Es ist ein Merkmal der Erfindung, die Konzentration von Wasser zu messen. Mittels des genannten Verfahrens kann die Konzentration eines Stoffes sowie die Temperatur verteilt gemessen werden und durch eine einzelne Sensorfaser können eine große Anzahl herkömmlicher Punktsensoren ersetzt werden. Dies verringert den Material- und Installationsaufwand bei gleichzeitig geringeren Kosten. Da die Konzentration eines Stoffes sowie die Temperatur entlang der Sensorfaser ortsaufgelöst ermittelt wird, kann die Messstrecke lückenlos bzgl. dieser Parameter überwacht werden. Dabei können Strukturen großer Ausdehnung bis zu mehreren hundert Metern mit geringem Aufwand überwacht werden. Es ist ferner möglich durch die Rückstreudaten der Molekülkonzentration und der Temperatur genauere Messergebnisse zu erhalten, die Einflüsse von Temperatur und Molekülkonzentration zu trennen sowie andere Einflussgrößen zu eliminieren. Insbesondere lassen sich durch die Auswertung der Rückstreumessung bei einer zweiten Wellenlänge, die nicht durch optische Verluste beeinflusst ist, ortsaufgelöste Rückstreuintensitätsänderungen eindeutig bestimmen und ortsaufgelöste Messwerte können abgeleitet werden. Weiterhin ist der faseroptische Sensor aus Polymerfaser mechanisch und chemisch robust sowie gegenüber elektromagnetischen Feldern unempfindlich.

Gemäß einer Weiterbildung umfasst das Verfahren weiterhin das Ermitteln eines Dämpfungsprofils entlang der optischen Polymerfaser aus den Rückstreu-Messdaten, wobei das Konzentrationsprofil und/oder das Temperaturprofil auch mittels des Dämpfungsprofils ermittelt wird (werden).

Auf diese Weise wird die feuchtigkeitsabhängige Signaldämpfung einbezogen und die Genauigkeit des Verfahrens erhöht. Darüber hinaus erleichtert die Berücksichtigung der konzentrationsabhängigen und der temperaturabhängigen Dämpfung auch eine Trennung des Messsignals in einen konzentrationsabhängigen und einen temperaturabhängigen Anteil. Ferner erlaubt die Berücksichtigung konzentrationsabhängigen und der temperaturabhängigen Rückstreuintensitäten sowie konzentrationsabhängigen und der temperaturabhängigen Dämpfung eine Zuordnung, ob eine Temperaturänderung oder eine Konzentrationsänderung Ursache für detektierte Effekte ist.

Gemäß noch einer Weiterbildung wird zunächst eine erste Rückstreumessung von einem ersten Ende der optischen Polymerfaser her durchgeführt und anschließend eine zweite Rückstreumessung von einem zweiten Ende der optischen Polymerfaser her durchgeführt.

Auf diese Weise kann die Genauigkeit der Feuchtemessung, d.h. insbesondere die Ortsauflösung der Messung, erhöht werden.

Gemäß der Erfindung wird die Referenzintensität anhand eines oder mehrerer Reflektoren, die in die optische Polymerfaser eingebracht sind, ermittelt werden. Beispielsweise können diese Reflektoren mittels Steckverbindern gebildet sein. Als Reflektoren bzw. als Streuintensitätsreferenzen können auch Faserabschnitte eingefügt werden, die generell nicht auf die zu untersuchende Chemikalie, wie beispielsweise Wasser oder Ethen reagieren, wie etwa Glasfaserabschnitte, oder Abschnitte, die ausreichend geschützt sind, beispielsweise durch entsprechende Beschichtung. Zusätzlich oder alternativ (außerhalb der Erfindung) kann die Referenzintensität anhand eines oder mehrerer Faserabschnitte, die eine Molekülkonzentration oder im Falle von Wasser eine Feuchtigkeit von 100% aufweisen, ermittelt werden. Beispielsweise kann ein Abschnitt der Sensorfaser in der entsprechenden Chemikalie wie zum Beispiel Wasser gelagert sein. Auf diese Weise wird ebenfalls eine Streuintensitätsreferenz bereitgestellt. Insbesondere können sowohl "trockene" als auch "nasse" Referenzen bereitgestellt werden. Ferner können "kalte" oder auch "warme" Referenzen bereitgestellt werden. Des Weiteren ist es möglich Intensitätsreferenzen durch Bereitstellung von unveränderlichen Streuzentren in der polymeren Faser bei gegebener Molekülkonzentrationen und/oder Temperaturen und anschließender Rückstreumessung (z.B. OTDR) zu generieren. Mittels der oben beschriebenen Intensitätsreferenzen kann die Genauigkeit der Messung erhöht werden.

Gemäß der Erfindung werden Rückstreu-Messdaten einer optischen Polymerfaser für eine erste Wellenlänge mit messbarer Absorption für zu detektierende Molekülgruppen bereitgestellt. Bei einer solchen Wellenlänge treten messbare und signifikante optische Verluste durch Absorption auf. Ferner werden Rückstreu-Messdaten einer optischen Polymerfaser für eine zweite Wellenlänge ohne oder mit geringer messbarer Absorption für zu detektierende Molekülgruppen bereitgestellt. Bei einer solchen zweiten Wellenlänge tritt kaum messbarer optischer Verlust, bevorzugt <1dB/m, weiter bevorzugt <0,75 dB/m und noch weiter bevorzugt <0,5 dB/m im Vergleich zum normierten Verlust bei einer Wellenlänge ohne optischen Verlust auf. Am meisten bevorzugt wird unter kaum messbaren optischen Verlust im Vergleich zum normierten Verlust bei einer Wellenlänge ohne optischen Verlust ein Verlust von <200 dB/km, weiter bevorzugt <100 dB/km, noch weiter bevorzugt <60 dB/km und noch weiter bevorzugt <30dB/km verstanden. Am meisten bevorzugt ist, dass bei der zweiten Wellenlänge keine Absorption durch Molekülkonzentrationen auftritt. In einer bevorzugten Ausführungsform des vorgeschlagenen Verfahrens wird zur Ermittlung der Konzentration von Wasser in Schritt (a) Licht mit einer Wellenlänge von λ = 1310 nm, und in Schritt (b) Licht mit einer Wellenlänge von λ = 1000 nm bereitgestellt.

Gemäß der vorliegenden Erfindung umfasst eine Messvorrichtung eine optische Polymerfaser, eine erste Lichtquelle, die eingerichtet ist, Licht einer ersten Wellenlänge mit messbarer Absorption für zu detektierende Molekülgruppen in die optische Polymerfaser einzuleiten, eine zweite Lichtquelle, die eingerichtet ist, Licht einer zweien Wellenlänge ohne oder mit geringer messbarer Absorption für zu detektierende Molekülgruppen in die optische Polymerfaser einzuleiten, einen Detektor, der eingerichtet ist, aus der optischen Polymerfaser rückgestreutes Licht als Rückstreu-Messdaten aufzunehmen, und eine Auswerteeinheit, die eingerichtet ist, auf den Rückstreu-Messdaten ein Verfahren gemäß einem Ausführungsbeispiel der vorliegenden Erfindung auszuführen.

Polymerfasern können dabei beispielsweise aus Thermoplasten hergestellt werden. Unter den Thermoplasten können neben PMMA beispielsweise auch optische Fasern aus Polycarbonat oder Polystyrol hergestellt werden. Weiterhin können auch optische Fasern aus zyklischen Polyolefinen hergestellt werden. Weiterhin können optische Fasern auch mit deuteriertem Polymer auf Basis von PMMA hergestellt werden. Neben diesen Thermoplasten können optische Fasern auch aus Elastomeren wie beispielsweise Polysiloxanen hergestellt werden. Insbesondere kann aber die optische Polymerfaser als Bestandteil Polymethylmethacrylat (PMMA) aufweisen oder gemäß einem Ausführungsbeispiel vollständig aus PMMA bestehen. Gemäß alternativen Ausführungsformen kann der Fasersensor als optische Polymerfaser (POF) auch ein Fluoropolymer oder ein Perfluorpolymer aufweisen. Es ist bei der Erfindung vorgesehen, dass die optische Polymerfaser aus CYTOP^{Ⓡ}, ein Cyclopolymerisat aus Perfluoro(alkenyl vinyl ether) der folgenden Formel 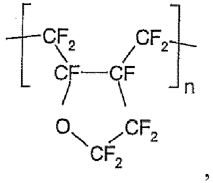 Weitere Fluoropolymere neben CYTOP^{Ⓡ}, die zur Herstellung optischer Fasern außerhalb der Erfindung geeignet sind, umfassen Hexafluoroisopropyl 2-Fluoroacrylat (HFIP 2-FA), Polytetrafluoroethylen (PTFE), Tetrafluoroethylen-Hexafluoropropylen (PFE) und Tetrafluoroethylen-Perfluoroalkylvinyl-Ether (PFA). Wie bereits erwähnt kann die optische Polymerfaser zumindest einen Reflektor aufweisen, der eine Referenzstreuintensität bereitstellt. Ferner kann die optische Polymerfaser als mikrostructurierte Faser ausgeführt sein, z.B. als photonic crystal fiber, die es erlaubt mit dem umgebenen Medium zu interagieren (evaneszentes Feld). Vorteil einer solchen Ausführungsform liegt in noch geringerem Verlust und kürzeren Ansprechzeiten.

Weiterhin kann die optische Polymerfaser als Gradientenindexfaser oder als Stufenindexfaser ausgeführt sein. Beispielweise wird eine Sensorfaser aus PMMA (nicht Teil der Erfindung) oder CYTOP^{Ⓡ} mit einem Kerndurchmesser von 1 mm und kleiner und einem Stufenindexprofil verwendet. In einem weiteren Ausführungsbeispiel der Erfindung wird eine Sensorfaser aus CYTOP^{Ⓡ} mit einem Kerndurchmesser von 50 µm bis 120 µm ein einem Gradientenindexprofil vorgeschlagen. Die zwei zuvor genannten Faserbeispiele sind von den Firmen Mitsubishi, Toray, Chromis Fiberoptics Inc. und Asahi Glas erhältlich. Die Fasern sind auch mit anderen Kerndurchmessern bei gleichem Material verfügbar. Weiterhin zeigen Fasern auf PMMA-Basis eine Dämpfung im Bereich von 160 dB/km bei der üblichen Wellenlänge von 650 nm. Fasern aus CYTOP^{Ⓡ} wie bei der vorliegenden Erfindung, beispielsweise lassen sich ohne Beschädigung sehr umfassend dehnen (bis über 100%). Weiterhin zeigen diese Fasern je nach Hersteller eine Dämpfung im Bereich von <60 dB/km, teilweise <40 dB/km. Insbesondere zeigen diese Fasern eine Dämpfung von <10 dB/km bei einer Wellenlänge von 1070 nm und 15 dB/km bei 1310 nm. Darüber hinaus weiten sich eingespeiste Lichtpulse aufgrund des Stufenindexprofils entlang der Faser stark auf. Eine Gradientenindexfaser aus PMMA mit 1 mm Kerndurchmesser ist von der Firma optimedia erhältlich. Darüber hinaus ist diese Faser deutlich zerbrechlicher als die oben genannten Stufenindexfasern. Alle diese PMMA-Fasern werden außerhalb des Bereichs der Erfindung mit Lichtquellen 110, 111, 112 und 113 verwendet, die im sichtbaren Wellenlängenbereich zwischen 400 nm und 700 nm arbeiten, oder auch im Bereich von 400nm bis 1500 nm. Alle diese CYTOP^{Ⓡ}-Fasern werden typischerweise mit Lichtquellen 110, 111, 112 und 113 verwendet, die im Wellenlängenbereich zwischen 800 nm und 1400 nm arbeiten.

Gemäß einer Ausführungsform weist die optische Polymerfaser weiterhin eine im Wesentlichen röhrenförmige Aufnahme auf, wobei die optische Polymerfaser im Inneren der Aufnahme im Wesentlichen spannungsfrei gelagert ist. Die Aufnahme ist je nach Ausführung für Gase, flüssige Chemikalien und Feuchtigkeit durchlässig. Beispielsweise ist die Aufnahme perforiert. Gemäß einer Ausführungsform ist der Innendurchmesser der Aufnahme so bemessen, dass für die zu messende Flüssigkeit kein Kapillareffekt auftritt.

Anhand der beigefügten Zeichnungen werden nun Ausführungsbeispiele der vorliegenden Erfindung erläutert. Dabei zeigt:
- Fig. 1: eine schematische Darstellung einer Messvorrichtung für Testuntersuchungen;
- Fig. 2: eine schematische Darstellung einer Messvorrichtung gemäß einem Ausführungsbeispiel;
- Fig. 3: den räumlichen Verlauf der Rückstreuintensität innerhalb der optischen Faser unter verschiedenen Feuchtigkeits- und Temperaturbedingungen, insbesondere für den Bereich in der Klimakammer;
- Fig. 4: die gemessene zusätzliche Dämpfung durch Absorption (durch OH-Gruppen) in Abhängigkeit der Feuchte im zeitlichen Verlauf bei 70 °C;
- Fig. 5: in (A) die Transmissionsintensität bei 30% relativer Luftfeuchte für 30 °C und 70 °C und in (B) die Transmissionsintensität bei 70 °C für relative Luftfeuchten von 30%, 60% und 90%;
- Fig. 6: in (A) die gemessene zusätzliche Dämpfung durch Absorption (durch OH-Gruppen) im zeitlichen Verlauf in Abhängigkeit der Temperatur bei relativer Luftfeuchte von 30% für zwei vollständige Zyklen von -20 °C zu 70 °C und in (B) die Dämpfung im zeitlichen Verlauf in Abhängigkeit der Temperatur bei relativer Luftfeuchte von 90% für zwei vollständige Zyklen von -20 °C zu 70 °C. Die maximale gemessene Verluständerung in perfluorinierten POF liegt hier bei etwa 0.03 dB/m.
- Fig. 7: in (A) die Rückstreuintensität im zeitlichen Verlauf in Abhängigkeit der Temperatur bei relativer Luftfeuchte von 30% für zwei vollständige Zyklen von -20 °C zu 70 °C und in (B) die Rückstreuintensität im zeitlichen Verlauf in Abhängigkeit der Temperatur bei relativer Luftfeuchte von 90% für zwei vollständige Zyklen von -20 °C zu 70 °C.

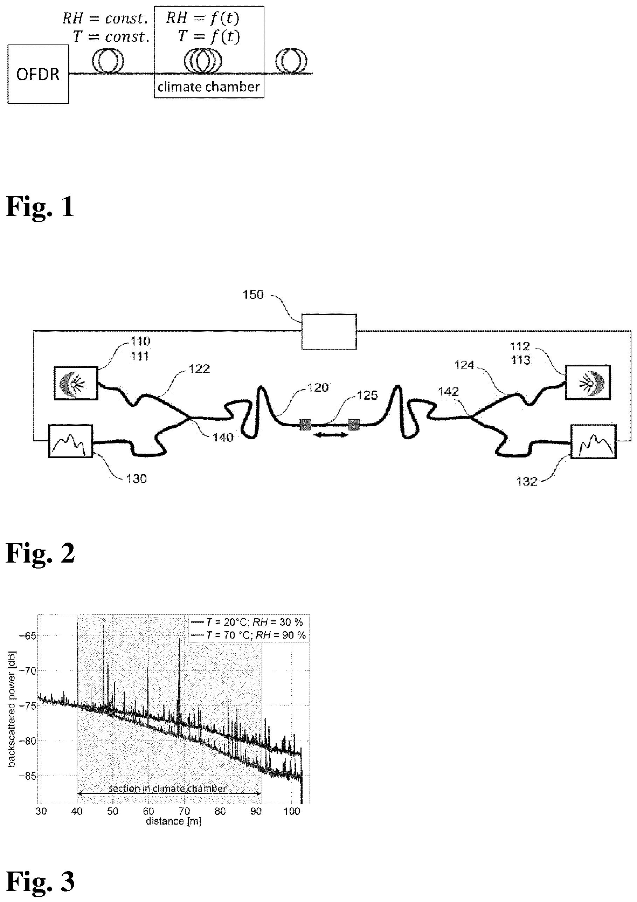

Die Fig. 1 zeigt den schematischen Aufbau einer Messvorrichtung für Testuntersuchungen zum vorliegenden Vorschlag für ein hierin beschriebenen Verfahrens. Ein beliebiges Rückstreumessgerät (typisch: optisches Zeitbereichsreflektometer (OTDR), hier gezeigt ein inkohärentes optisches Frequenzbereichsreflektometer (OFDR)) ist mit der Sensorfaser verbunden. Der mittlere Teil der Faser befindet sich in einer Klimakammer. In dieser Klimakammer können Temperatur (*T*) und relative Feuchte *(RH)* unabhängig voneinander verändert werden. Außerhalb der Klimakammer sind Feuchte und Temperatur konstant. Die Rückstreuparameter Dämpfung sowie die Änderung der lokalen Streuintensität relativ zu einer Referenzmessung können als Funktion von relativer Feuchte und Temperatur ausgewertet werden.

Die Fig. 2 zeigt eine schematische Darstellung einer Messvorrichtung 100 gemäß einem Ausführungsbeispiel. Die Messvorrichtung 100 umfasst Lichtquellen 110, 111, 112 und 113, die eingerichtet sind, Licht, und dabei insbesondere Lichtpulse, in einen optischen Fasersensor 120 einzuleiten. Hierbei stellen gemäß einem Vorschlag die Lichtquellen 110 und 112 einerseits, und die Lichtquellen 111 und 113 andererseits, Licht mit unterschiedlichen Wellenlängen bereit. Gemäß einem Ausführungsbeispiels stellt Lichtquelle 110 oder 112 Licht mit einer Wellenlänge bereit, bei der Absorption einer zu detektierenden Molekülgruppe auftritt, wohingegen Lichtquelle 111 oder 113 Licht mit einer Wellenlänge bereitstellt, bei der keine oder geringe messbare Absorption beobachtet wird. In der dargestellten Ausführungsform in Fig. 2 werden Lichtquellen, die zwei verschiedene Wellenlängen eingespeist werden. Es ist allerdings auch möglich weitere Lichtquellen 111a, b, c etc. und 113a, b, c in die Messvorrichtung zu implementieren, um mit verschiedensten Wellenlängen zu bestrahlen, um Absorption von verschiedenen Molekülgruppen zu detektieren. Ferner kann auch eine Lichtquelle 110 verwendet werden, die so eingerichtet ist, das sie Licht definierter unterschiedlicher Wellenlängen aussendet. In einem solchen Beispiel stellen Lichtquellen 110 und 111 dieselbe Lichtquelle dar, die allerdings mit einer ersten und mit einer zweiten Wellenlänge Licht einstrahlen kann. In dem vorliegenden Ausführungsbeispiel weist die Messvorrichtung 100 eine erste Lichtquelle 110 auf, die Licht einer Wellenlänge, bei der Absorption einer zu detektierenden Molekülgruppe auftritt, in ein vorderes Ende 122 der Sensorfaser 120 einleitet, sowie eine zweite Lichtquelle 112, die Licht derselben Wellenlänge in ein hinteres Ende 124 der Sensorfaser 120 einleitet. Die Messvorrichtung 100 weist ferner eine dritte Lichtquelle 111 auf, die Licht einer Wellenlänge, bei der keine oder geringe messbare Absorption einer zu detektierenden Molekülgruppe auftritt, in ein vorderes Ende 122 der Sensorfaser 120 einleitet, sowie eine vierte Lichtquelle 113, die Licht derselben Wellenlänge in ein hinteres Ende 124 der Sensorfaser 120 einleitet. Es ist dabei zu beachten, dass Messungen am vorderen und am hinteren Ende der Sensorfaser 120 zeitlich hintereinander durchgeführt werden. Daher ist es auch möglich, dass das vordere Ende und das hintere Ende der Sensorfaser mit derselben Lichtquelle und demselben Detektor verbunden sind. Dieses Ausführungsbeispiel ist in Fig. 2 nicht gezeigt, jedoch dem Fachmann ohne weiteres geläufig. Grundsätzlich sind die Messungen jedoch auch durchführbar, wenn das Licht nur an einem Ende der Sensorfaser eingespeist wird.

Weiterhin umfasst die Messvorrichtung 100 Detektoren 130, 132, die eingerichtet sind, aus dem Fasersensor 120 rückgestreutes Licht als Rückstreu-Messdaten aufzunehmen. Dabei kann eine optische Rückstreumessung im Zeitbereich (OTDR), eine optische Rückstreumessung im Korrelationsbereich (OCDR), oder eine optische Rückstreumessung im Frequenzbereich (OFDR bzw. C-OFDR) durchgeführt werden. Insbesondere kann die Rückstreuung mit praktisch jedem Reflektometer gemessen werden, das eine Impulsantwort der Sensorfaser messen kann. Beispielhaft jedoch ohne Beschränkung der Allgemeinheit wird hier eine optische Rückstreumessung im Zeitbereich (OTDR) oder wie in den Figuren 3 bis 6 verwendet eine Rückstreumessung mit inkohärentem OFDR (I-OFDR) beschrieben. Dazu sind die Detektoren 130, 132 eingerichtet, das Streulicht zeitaufgelöst zu registrieren. Gemäß einem Ausführungsbeispiel sind sowohl am vorderen als auch am hinteren Ende der Sensorfaser 120 optische Koppler 140, 142 vorgesehen, die das Streulicht aus der Faser auskoppeln und an den jeweiligen Detektor 130, 132 leiten.

Schließlich umfasst die Messvorrichtung 100 noch eine Auswerteeinheit 150. Die Auswerteeinheit 150 erhält die von den Detektoren 130, 132 aufgenommenen Rückstreu-Messdaten und ist eingerichtet, aus den ortsaufgelösten Rückstreu-Messdaten ein unten beschriebenes Messverfahren gemäß einem Ausführungsbeispiel der vorliegenden Erfindung auszuführen. Typischerweise umfasst die Auswerteeinheit 150 einen Rechner, auf dem ein Computerprogramm ausgeführt wird, das das beschriebene Messverfahren durchführt. Die Auswerteeinheit 150 ist typischerweise weiterhin eingerichtet, aus den Rückstreu-Messdaten ein Konzentrations- und/oder Temperaturprofil der Sensorfaser 120 zu erhalten. Insbesondere kann ein Feuchteprofil für eine Feuchtigkeit ausgesetzte Messstrecke 125 der Sensorfaser 120 erhalten werden.

Die Messvorrichtung 100 kann insbesondere zur Überwachung ausgedehnter Bauwerke verwendet werden. Dabei kann die Sensorfaser 120 auf Mauerwerk mit Schellen oder Putz oder Kleber befestigt sein. Die Sensorfaser kann jedoch auch in einem Textil, insbesondere in einem Geotextil, eingebettet sein. Im Erdreich können die Sensorfasern in Bohrlöcher integriert oder beim Bau verlegt werden. Gemäß anderen Ausführungsformen können die Fasern in Rohren, in textilen Seilen oder gar blank verlegt werden.

In einem ersten Schritt des beschriebenen Verfahrens zur Messung eines Konzentrationsprofils und/oder eines Temperaturprofils werden die Rückstreu-Messdaten der optischen Polymerfaser 120 einer ersten Wellenlänge mit messbarer Absorption für zu detektierende Molekülgruppen an die Auswerteeinheit 150 bereitgestellt. Die Auswerteeinheit 150 ermittelt dann ein Streuintensitätsprofil entlang der optischen Polymerfaser 120 aus den Rückstreu-Messdaten. Beispielsweise kann dies mittels OTDR, OFDR, OCDR oder anderer Reflektometrieverfahren erfolgen. In einem zweiten Schritt werden die Rückstreu-Messdaten der optischen Polymerfaser 120 einer zweiten Wellenlänge ohne oder mit geringer messbarer Absorption für zu detektierende Molekülgruppen an die Auswerteeinheit 150 bereitgestellt. Die Auswerteeinheit 150 ermittelt dann ein Streuintensitätsprofil entlang der optischen Polymerfaser 120 aus den Rückstreu-Messdaten. In einem nächsten Schritt werden die ermittelten Streuintensitätsprofile für die unterschiedlichen Wellenlängen miteinander verglichen, um Temperaturprofile und/oder Konzentrationsprofile wie entsprechend der Erfindung, Feuchteprofile zu bestimmen.

In einem weiteren Schritt werden ferner die Streuintensitäten an einem jeweiligen Ort der Sensorfaser mit einer Referenzintensität verglichen, um eine relative Streuintensität an dem Ort zu erhalten. Die Aufnahme der Referenzintensitäten findet unter bekannten Bedingungen statt und mit bekanntem Systemaufbau. Streuintensitätsreferenzen sind in der Erfindung als Reflektoren in der Faser ausgebildet . Andernfalls können Faserabschnitte, die generell nicht auf bestimmte Chemikalien oder Feuchte reagieren, wie etwa Glasfaserabschnitte, oder Abschnitte, die ausreichend gegen die zu untersuchenden Chemikalien mit entsprechenden Molekülgruppen oder Feuchte geschützt sind, verwendet werden. Hinsichtlich einer generellen Messung von Chemikalien wie Wasser, Methan, Ethen, Propen, Ammoniak, Benzol, Toluol oder Xylol können Intensitätsreferenzen ermittelt werden, indem Abschnitte der Sensorfaser in der entsprechenden Chemikalie oder einer gesättigten Atmosphäre der Chemikalie gelagert werden, oder bei einer definierten Konzentration der entsprechenden Chemikalie in Luft oder eines geeigneten Lösungsmittels, oder in völliger Abwesenheit der entsprechenden Chemikalie gelagert werden. Hinsichtlich einer Feuchtemessung sind Intensitätsreferenzen sogenannte "trockene" Referenzen, wenn sie die Streuintensität für 0% Feuchte bzw. einen definierten niedrigen Feuchtigkeitswert wie etwa 20% bereitstellen. Zusätzlich oder alternativ kann die Referenzintensität anhand eines oder mehrerer Faserabschnitte, die eine Feuchtigkeit von 100% aufweisen, ermittelt werden. Diese Referenzen können als "nasse" Referenzen bezeichnet werden. Beispielsweise kann ein Abschnitt der Sensorfaser in Wasser gelagert sein. Auf diese Weise wird ebenfalls eine Streuintensitätsreferenz bereitgestellt. Insbesondere können sowohl "trockene" als auch "nasse" Referenzen bereitgestellt werden. Hinsichtlich einer Temperaturmessung sind Intensitätsreferenzen "kalte" Referenzen, wenn sie die Streuintensität für eine festgelegte Temperatur von 25 °C bzw. eine definierte Temperatur im Bereich von 20 bis 30 °C bereitstellen. Zusätzlich oder alternativ kann die Referenzintensität anhand eines oder mehrerer Faserabschnitte, die eine erhöhte Temperatur von 70 °C bzw. einer festgelegten Temperatur im Bereich von 60 bis 95 °C aufweisen, ermittelt werden. Diese Referenzen können als "warme" Referenzen bezeichnet werden. Mittels der oben beschriebenen Intensitätsreferenzen kann die Genauigkeit der Messung erhöht werden. Die Referenzstellen, gemäß der Erfindung Reflektoren, sind typischerweise in vorbestimmten Abständen, z.B. 10 m, voneinander beabstandet in der Sensorfaser 120 angeordnet. Je nach Fasertyp müssen auch gewisse Mindestabstände zwischen den Referenzen eingehalten werden. Die Ermittlung der Referenzen kann in einer Ausführungsform des vorgeschlagenen Verfahrens als Schritt einer zusätzlichen Referenzmessung bei bekannten Umweltbedingungen durchgeführt werden, insbesondere kann die Referenzmessung auch vorgeschaltet sein und somit vor der eigentlichen Messung in der Sensorfaser durchgeführt werden. In einem abschließenden Schritt wird ferner ein Konzentrationsprofil und/oder ein Temperaturprofil entlang der optischen Polymerfaser anhand des relativen Streuintensitätsprofils ermittelt.

Fig. 3 zeigt die ortsaufgelöste Rückstreuintensität für eine optische Faser bis zu einer Länge von 100 m. Der Versuchsaufbau für die abgebildete Untersuchung umfasst eine Klimakammer, durch die die Faser im Längenbereich von 40 bis 92 m hindurch führt. Abgebildet sind die ortsaufgelöste Rückstreuintensitäten für konstante Bedingungen außerhalb der Klimakammer (Längenbereiche 0 bis 40 m und >92 m, T = 23 °C, relative Luftfeuchte 55%) und unterschiedliche Bedingungen innerhalb der Klimakammer: T = 20 °C, relative Luftfeuchte 30% und T = 70 °C, relative Luftfeuchte 90%. Durch eine solche Versuchsanordnung kann der Einfluss von Veränderungen bezüglich der Temperatur und der relativen Luftfeuchte ermittelt werden. Ersichtlich ist, dass die ortsaufgelöste Rückstreuintensität für beide Messungen unter konstanten Bedingungen, also außerhalb der Klimakammer gleich verläuft, sowohl im Bereich vor der Klimakammer als auch für den Bereich hinter der Klimakammer. Für den Bereich in der Klimakammer, in dem während der zwei Messungen deutliche Unterschiede sowohl bezüglich der Temperatur als bezüglich der relativen Luftfeuchte vorherrschten, wird ein deutlicher Abfall der Rückstreuintensität beobachtet, wenn höhere Temperaturen und höhere Luftfeuchte die Faser umgibt. Für die Messungen wurde so verfahren, dass sich in der Faser unter den gegebenen Bedingungen aus Temperatur und Luftfeucht eine stabile Feuchte gebildet hat. Anschließend wurde eine ortsauflösende Rückstreumessung durchgeführt. Während kaum eine Unterschied zwischen den Bedingungen T = 23 °C, relative Luftfeuchte 55% und T = 20 °C, relative Luftfeuchte 30% zu beobachten ist und ein annähernd steter Abfall der Rückstreuintensität beobachtet wird, ist ein stärkerer Abfall an Rückstreuintensität erkenntlich für den Bereich mit T = 70 °C, relative Luftfeuchte 90% bedingt durch höhere Absorption entlang der Faser. Hohe Temperaturen und hohe Luftfeuchte begünstigen die Aufnahme von OH-Gruppen in den Faserkern und führen zu einer Änderung des Rückstreuintensitätsverlaufes entlang der Faser bedingt durch eine Erhöhung der Dämpfung.

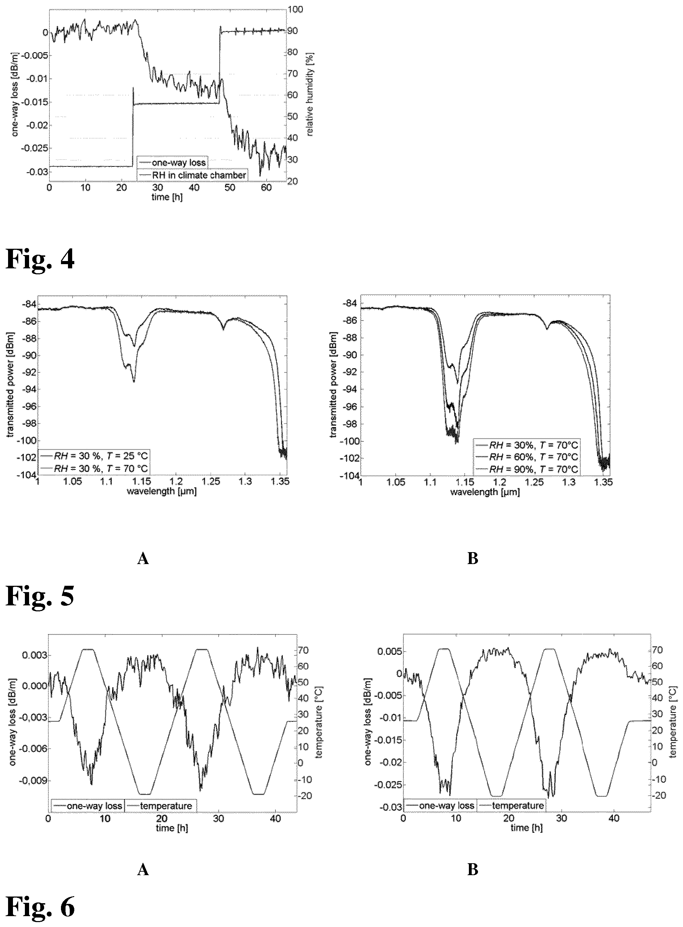

Es hat sich ferner gezeigt, dass die Dämpfung direkt von der Wasseraufnahme in die Faser abhängt und vollständig reversibel ist. Fig. 4 zeigt den Verlauf der Dämpfung, wenn unter konstanten Temperaturbedingungen (hier 70 °C) über einen längeren Zeitraum 0 bis 70 Stunden die relative Luftfeuchte in Intervallen angehoben wird. Es wird ersichtlich, dass eine höhere Wasserkonzentration in der Faser einen Anstieg der Dämpfung nach sich zieht. Im Speziellen ist ersichtlich, dass ein Anstieg der Luftfeuchtigkeit von ca. 26% auf 90% zu einer Dämpfung von 0,026 dB/m führt.

Den jeweiligen Einfluss von relativer Luftfeuchte und Temperatur können Messungen zur Durchgangsintensität in Abhängigkeit der eingestrahlten Wellenlängen bestimmen. Es wird aus Fig. 5 ersichtlich, dass sowohl relative Luftfeuchte als auch Temperatur Einfluss nehmen und gegenseitig in Wechselwirkung stehen. Für die dargestellten Messungen wurde weißes Licht in eine geeignete optische Faser (hier: perfluorierte Faser auf CYTOP-Basis) zur Bereitstellung einer breiten optischen Bandbreite eingestrahlt. Wie in Fig. 5 (A) dargestellt führt eine Temperaturerhöhung von 25 °C auf 70 °C zu einer Verringerung der Durchgangsintensität in Bereichen in denen spektrale Absorption stattfindet wie beispielsweise um λ = 1130 und um λ = 1383 bei gleicher relativer Luftfeuchte. Demgegenüber hat sich gezeigt, wie unter Fig. 5 (B) ersichtlich, dass eine Erhöhung der relativen Luftfeuchte von 30% über 60% auf 90% eine starke Verringerung der Durchgangintensität nach sich zieht. Es konnte demgemäß gezeigt werden, dass sowohl die Erhöhung der Temperatur als auch der relativen Luftfeuchte einen signifikanten Einfluss auf die Durchgangsintensität ausüben.

Demgemäß können nach einem hierin beschriebenen Vorschlag zunächst Rückstreu-Messdaten einer optischen Polymerfaser für eine erste Wellenlänge mit messbarer Absorption für zu detektierende Molekülgruppen wie gemäß der Erfindung Wasser bereitgestellt werden. Im Anschluss werden ferner Rückstreu-Messdaten einer optischen Polymerfaser für eine zweite Wellenlänge ohne oder mit geringer messbarer Absorption für zu detektierende Molekülgruppen bereitgestellt werden. Tritt an einer Stelle der optischen Faser eine Verringerung der Durchgangsintensität, kann durch Vergleich der Daten zu einer Wellenlänge ohne Absorption eindeutig festgestellt werden, ob die Verringerung der Durchgangsintensität seinen Ursprung in einer Erhöhung der Temperatur oder der relativen Feuchte hat, oder eine andere Ursache zugrunde liegt. Für den Fall, dass keine Verringerung der Durchgangsintensität bei einer Wellenlänge ohne Absorption festgestellt wird, kann darauf geschlossen werden, dass die Ursache in einer Erhöhung der Temperatur oder der relativen Feuchte. Andere Ursachen können ausgeschlossen werden.

In Fig. 6 ist die Dämpfung innerhalb der optischen Faser dargestellt in Abhängigkeit von der Temperatur für zwei Durchläufe von -20 bis 70 °C innerhalb von über 40 Stunden. Die Messungen wurden bei zwei verschiedenen relativen Luftfeuchten durchgeführt: 30% abgebildet unter 6 (A) und 90%, abgebildet in 6 (B). Es wird ersichtlich, dass die Änderung der Temperatur einen signifikanten Einfluss auf die Dämpfung ausübt. Bei 30% relativer Luftfeuchte führt der Anstieg von -20 °C auf 70 °C zu einem Anstieg der Dämpfung von 0,012 dB/m, während der gleiche Temperaturanstieg bei 90% Feuchte einen Anstieg der Dämpfung von 0,03 dB/m zur Folge hat.

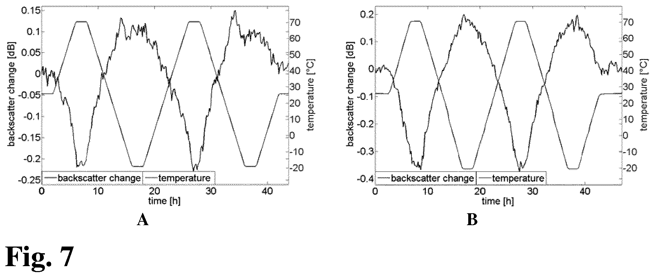

In Fig. 7 ist zusätzlich die Änderung der Rückstreuintensität innerhalb der optischen Faser dargestellt in Abhängigkeit von der Temperatur für zwei Durchläufe von -20 °C bis 70 °C innerhalb von über 40 Stunden dargestellt. Auch für die Rückstreuintensität ist gefunden worden, dass der Einfluss der Temperatur größer ist als der der relativen Luftfeuchte. In den Fig. 7 (A) und (B) ist zu erkennen, dass sich die Rückstreuintensität bei -20 °C bei einer Erhöhung von 30% relativer Luftfeuchte auf 90% relative Luftfeuchte um 0,05 dB verringert, während eine Verringerung von 0,13 dB bei 70 °C beobachtet wird. Im Vergleich dazu verringert sich die Rückstreuintensität bei 30% relativer Luftfeuchte um 0,38 dB bei einer Erwärmung von -20 °C auf 70 °C. Bei 90% relativer Luftfeuchte führt derselbe Temperaturanstieg zu einer Verringerung der Rückstreuintensität von 0,55 dB.

Die vorgelegten Daten zeigen somit, dass es gemäß dem hierin beschriebenen Verfahren zur Messung eines Konzentrationsprofils und/oder eines Temperaturprofils mittels faseroptischen Sensor nicht nur möglich ist Feuchtigkeit und Temperaturänderungen entlang des faseroptischen Sensors zu detektieren, es ist ferner möglich auch eine Zuordnung auf eine Temperaturänderung oder ein Konzentrationsunterschied eines zu detektierenden Stoffes vorzunehmen. Wie oben gezeigt, kann durch Einstrahlung unterschiedlicher Wellenlängen, wobei bei einer Wellenlänge Absorption und bei der zweiten Wellenlänge keine oder nur geringe Absorption stattfindet, ermittelt werden, dass eine Temperaturänderung oder ein Konzentrationsunterschied für Ursache für Dämpfung innerhalb der Faser ist. Wird ferner gefunden, dass die Dämpfung (bei erster Wellenlänge) und die Abnahme der Rückstreuintensität (bei zweiter Wellenlänge) relativ hoch ausfällt, kann geschlossen werden, dass dafür hauptsächlich eine Temperaturänderung verantwortlich ist. Des Weiteren kann durch die Auswertung der Änderung der Rückstreuintensität (wesentlich stärker für Temperatur und unbeeinflusst von zusätzlicher Dämpfung bei zweiter Wellenlänge) auf den Einfluss der Temperatur geschlossen werden und ferner die Temperatur grob abgeschätzt werden. Im Vergleich zu Verfahren, in denen nur mit einer Wellenlänge eingestrahlt wird, kann somit eine bei weiten umfassendere Information erhalten werden. Für den Fall, dass eine Dämpfungszunahme und dabei kaum Rückstreuintensitätsänderung bei zweiter Wellenlänge beobachtet wird, kann ferner sogar, durch Kennlinien, die beispielsweise aus Figur 4 extrahierbar sind, auf einen groben Messwert für die Konzentration geschlossen werden. Eine solche Anwendung ist mit den Verfahren aus dem Stand der Technik nicht möglich.

Die vorliegende Erfindung wurde anhand von Ausführungsbeispielen erläutert. Diese Ausführungsbeispiele sollten keinesfalls als einschränkend für die vorliegende Erfindung, die durch die Ansprüche definiert wird, verstanden werden.

## Patentansprüche

1. Verfahren zur Messung eines Feuchteprofils mit einem faseroptischen Sensor, umfassend:
(a) Bereitstellen einer optischen Polymerfaser (120) mit zumindest einem Reflektor;
(b) Bereitstellen von Rückstreu-Messdaten der optischen Polymerfaser (120) für eine erste Wellenlänge mit messbarer Absorption für zu detektierende OH-Gruppen bei einer gegebenen Temperatur;
(c) Bereitstellen von Rückstreu-Messdaten der optischen Polymerfaser (120) für eine zweite Wellenlänge ohne oder mit geringer messbarer Absorption für zu detektierende OH-Gruppen bei der gegebenen Temperatur;
(d) Ermitteln von ortsaufgelösten Streuintensitätsprofilen entlang der optischen Polymerfaser (120) aus den Rückstreu-Messdaten für die erste Wellenlänge und für die zweite Wellenlänge;
(e) Vergleichen des für die erste Wellenlänge ermittelten Streuintensitätsprofils und des für die zweite Wellenlänge ermittelten Streuintensitätsprofils mit einer jeweiligen Referenzintensität, die anhand des zumindest eines Reflektors ermittelt wird, um jeweilige relative Streuintensitätsprofile zu erhalten; und
(f) Ermitteln des Feuchteprofils entlang der optischen Polymerfaser (120) anhand der erhaltenen relativen Streuintensitätsprofile,
wobei die optische Polymerfaser (120) aus CYTOP^{®}, ein Cyclopolymerisat aus Perfluoro(alkenyl vinyl ether) der folgenden Formel 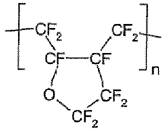 besteht und ausgewählt ist unter einer Faser mit einem Gradientenindexprofil oder mit einem Stufenindexprofil.

2. Verfahren nach Anspruch 1, weiterhin umfassend das Ermitteln eines Dämpfungsprofils entlang der optischen Polymerfaser (120) aus den Rückstreu-Messdaten, wobei das Feuchteprofil auch mittels des Dämpfungsprofils ermittelt wird.

3. Verfahren nach Anspruch 1 oder 2, wobei zunächst eine erste Rückstreumessung von einem ersten Ende (122) der optischen Polymerfaser (120) her durchgeführt wird und anschließend eine zweite Rückstreumessung von einem zweiten Ende (124) der optischen Polymerfaser (120) her durchgeführt wird.

4. Verfahren nach Anspruch 1, wobei in Schritt (b) Licht mit einer Wellenlänge von λ = 1310 nm bereitgestellt wird, und in Schritt (c) Licht mit einer Wellenlänge von λ = 1000 nm bereitgestellt wird.

5. Messvorrichtung (100) umfassend:
eine optische Polymerfaser (120), die ausgewählt ist unter einer Faser mit einem Gradientenindexprofil oder mit einem Stufenindexprofil,
eine erste Lichtquelle (110,112), die eingerichtet ist, Licht einer ersten Wellenlänge mit messbarer Absorption für zu detektierende Molekülgruppen in die optische Polymerfaser (120) einzuleiten,
eine zweite Lichtquelle (111,113), die eingerichtet ist, Licht einer zweien Wellenlänge ohne oder mit geringer messbarer Absorption für zu detektierende OH-Gruppen in die optische Polymerfaser einzuleiten,
einen Detektor (130,132), der eingerichtet ist, aus der optischen Polymerfaser (120) rückgestreutes Licht als Rückstreu-Messdaten aufzunehmen, und
eine Auswerteeinheit (150), die eingerichtet ist, auf den Rückstreu-Messdaten ein Verfahren nach einem der vorhergehenden Ansprüche auszuführen, wobei die optische Polymerfaser aus CYTOP^{®}, ein Cyclopolymerisat aus Perfluoro(alkenyl vinyl ether) der folgenden Formel 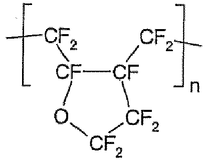 besteht, wobei die optische Polymerfaser zumindest einen Reflektor aufweist, der eine Referenzstreuintensität bereitstellt.

## Claims

1. A method for measuring a moisture profile using a fiber-optic sensor, comprising:
(a) providing a polymer optical fiber (120) comprising at least one reflector;
(b) providing backscatter measurement data of the polymer optical fiber (120) for a first wavelength with measurable absorption for OH groups to be detected at a given temperature;
(c) providing backscatter measurement data of the polymer optical fiber (120) for a second wavelength without or with low measurable absorption for OH groups to be detected at a given temperature;
(d) ascertaining spatially resolved scatter intensity profiles along the polymer optical fiber (120) from the backscatter measurement data for the first wavelength and for the second wavelength;
(e) comparing the scatter intensity profile ascertained for the first wavelength and the scatter intensity profile ascertained for the second wavelength to a respective reference intensity which is ascertained based on the at least one reflector to obtain respective relative scatter intensity profiles; and
(f) ascertaining the moisture profile along the polymer optical fiber (120) based on the obtained relative scatter intensity profiles,
wherein the polymer optical fiber (120) is made of CYTOP^{®}R), a cyclo polymer product of perfluoro(alkenyl vinyl ether) of the following formula 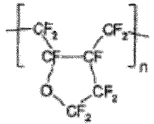 and is selected from a fiber having a graded index profile or having a step index profile.

2. The method according to claim 1, furthermore comprising ascertaining an attenuation profile along the polymer optical fiber (120) from the backscatter measurement data, the moisture profile also being ascertained by way of the attenuation profile.

3. The method according to claim 1 or 2, wherein initially a first backscatter measurement is carried out from a first end (122) of the polymer optical fiber (120), and thereafter a second backscatter measurement is carried out from a second end (124) of the polymer optical fiber (120).

4. The method according to claim 1, wherein in step (b) light having a wavelength of A = 1310 nm is provided, and in step (c) light having a wavelength of A = 1000 nm is provided.

5. A measuring device (100) comprising:
a polymer optical fiber (120), which is selected from a fiber having a graded index profile or having a step index profile;
a first light source (110, 112), which is configured to introduce light of a first wavelength with measurable absorption for molecule groups to be detected into the polymer optical fiber (120);
a second light source (111, 113), which is configured to introduce light of a second wavelength without or with low measurable absorption for OH groups to be detected into the polymer optical fiber;
a detector (130, 132), which is configured to record light back-scattered from the polymer optical fiber (120) as backscatter measurement data; and
an evaluation unit (150), which is configured to carry out a method according to any one of the preceding claims on the backscatter measurement data, wherein the optical fiber is made of CYTOP^{®}, a cyclo polymer product of perfluoro(alkenyl vinyl ether) of the following formula 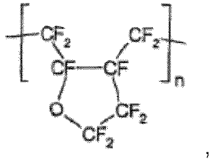 the polymer optical fiber comprising at least one reflector, which provides a reference scatter intensity.

## Revendications

1. Procédé de mesure d'un profil d'humidité avec un capteur à fibres optiques, comprenant :
(a) la fourniture d'une fibre optique polymère (120) comportant au moins un réflecteur ;
(b) fourniture de données de mesure de rétrodiffusion de la fibre optique polymère (120) pour une première longueur d'onde avec absorption mesurée pour les groupes OH à détecter à une température donnée ;
(c) fourniture de données de mesure de rétrodiffusion de la fibre optique polymère (120) pour une seconde longueur d'onde avec une absorption mesurable nulle ou faible pour les groupes OH à détecter à la température donnée ;
(d) détermination de profils d'intensité de diffusion spatialement résolus le long de la fibre optique polymère (120) à partir des données de mesure de rétrodiffusion pour la première longueur d'onde et pour la seconde longueur d'onde ;
(e) comparaison du profil d'intensité de diffusion déterminé pour la première longueur d'onde et du profil d'intensité de diffusion déterminé pour la seconde longueur d'onde avec une intensité de référence respective déterminée à partir de l'au moins un réflecteur pour obtenir des profils d'intensité de diffusion relatifs respectifs, et
(f) détermination du profil d'humidité le long de la fibre optique polymère (120) à l'aide des profils d'intensité de diffusion relatifs obtenus,
la fibre optique polymère (120) étant constituée de CYTOP^{®}, un cyclopolymère de perfluoro(alcénylvinyléther) ayant la formule suivante 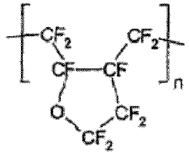 et est choisie parmi une fibre ayant un profil d'indice à gradient ou un profil d'indice à échelon.

2. Procédé selon la revendication 1, comprenant en outre la détermination d'un profil d'amortissement le long de la fibre optique polymère (120) à partir des données de mesure de rétrodiffusion, le profil d'humidité étant aussi déterminé à l'aide du profil d'amortissement.

3. Procédé selon la revendication 1 ou 2 comprenant une première mesure de la rétrodiffusion à partir d'une première extrémité (122) de la fibre optique polymère (120), et, ensuite, une seconde mesure de la rétrodiffusion à partir d'une seconde extrémité (124) de la fibre optique polymère (120).

4. Procédé selon la revendication 1, dans lequel, dans l'étape (b), une lumière ayant une longueur d'onde λ= 1 310 nm est fournie et, dans l'étape (c), une lumière ayant une longueur d'onde λ= 1 000 nm est fournie.

5. Dispositif de mesure (100) comprenant une fibre optique polymère (120), qui est choisie parmi une fibre ayant un profil d'indice à gradient ou un profil d'indice à échelon,
une première source de lumière (110, 112), qui est agencée pour injecter dans la fibre optique polymère (120) une lumière ayant une première longueur d'onde avec une absorption mesurable pour les groupes de molécules à détecter,
une seconde source de lumière (111, 113), qui est agencée pour injecter dans la fibre optique polymère (120) une lumière ayant une seconde longueur d'onde sans absorption mesurable ou avec une absorption mesurable pour les groupes OH à détecter,
un détecteur (130, 132), qui est agencé pour recueillir sous forme de données de mesure de rétrodiffusion la lumière rétrodiffusée par la fibre optique polymère (120), et
une unité d'évaluation (150), qui est agencée pour mettre en œuvre sur les données de mesure de rétrodiffusion un procédé selon l'une des revendications précédentes, la fibre optique polymère étant constituée de CYTOP^{®}, d'un cyclopolymère de perfluoro(alcénylvinyléther) ayant la formule suivante 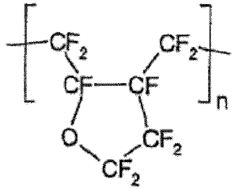 la fibre optique polymère comportant au moins un réflecteur, qui fournit une intensité de diffusion de référence.
